Europäisches Patentamt

(19) European Patent Office

Office européen des brevets

(11) Publication number: **0 107 626**
**B1**

# EUROPEAN PATENT SPECIFICATION

(45) Date of publication of patent specification: **10.12.86**

(21) Application number: **83830188.5**

(22) Date of filing: **30.09.83**

(51) Int. Cl.⁴: **B 65 B 1/36,** G 01 F 11/28, B 65 G 65/40, B 65 D 90/54

(54) **Device for dosing granular products, particularly food-stuffs.**

(30) Priority: **12.10.82 IT 355882**

(43) Date of publication of application:
**02.05.84 Bulletin 84/18**

(45) Publication of the grant of the patent:
**10.12.86 Bulletin 86/50**

(84) Designated Contracting States:
**CH DE FR GB LI**

(56) References cited:
**AT-B- 345 188**
**CH-A- 350 916**
**FR-A-2 228 216**
**GB-A-1 082 674**
**US-A-3 970 112**

(73) Proprietor: **Bugo, Federico**
**Via Albergati, 15**
**I-40135 Bologna (IT)**

(72) Inventor: **Bugo, Federico**
**Via Albergati, 15**
**I-40135 Bologna (IT)**

(74) Representative: **Lanzoni, Luciano**
**c/o BUGNION S.p.A. Via Farini, 37**
**I-40124 Bologna (IT)**

EP 0 107 626 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a device for dosing granular products, according to the preamble of claim 1.

As is known, foodstuffs of the said type, and other products of granular structure, are sent to the consumer sealed in bags that contain a quantity in weight that is rigorously constant and predetermined.

Special dosing machines have been constructed to fill, also on a large scale, the said bags or containers automatically and precisely. The said machines prevalently effect the dosing of the products in question in two separate stages. In the first stage, the product is delivered on the basis of relatively inexact volume or weight checks, and then, in a second stage, the apportioned quantities are perfected by means of precise weight checks.

In the said dosing operations the first stage is a fundamentally important one since the accuracy with which it can be effected determines whether or not it is necessary to resort to a second perfecting stage. However, the present dosing machines are unsatisfactory as regards the execution of the said first stage which can be accomplished by just filling to the brim receptacles that are made to pass in sequence in the region of a delivery pipe.

This system of filling the receptacles to the brim can be the cause of the product, when fragile (pieces of macaroni, for example) breaking between the receptacles itself and the delivery pipe, the latter exercising a shearing effect.

Another system for effecting the initial infeeding of the product involves the use of a vibrating surface that is also controlled by a suitable weight control system, though in this case the times for each cycle become long.

Normally; it is envisaged that in this first stage for filling bags, containers and the like, a quantity of the product less than the final predetermined amount be delivered thereto, and that the second stage for perfecting the dosed quantity, when applicable, be one in which the first supplied quantity is increased.

.It is obvious that in the event of it being possible to deliver the said products, straight away in the said first stage, in a virtually accurate fashion, the filling operations could be made a lot faster, with a consequent increase in the output level and a cut in the production costs.

Another important problem with the present dosing machines lies in the fact that they require relatively complex and costly setting-up operations and, above all, that once set, modifications that are considerable have to be made in order to vary the dosed quantities.

Different types of dosing machines of known type are those utilizing suction means as illustrated for example in the AT—B—345 188 which comprises a vertical pipe for delivering the product to be dosed consisting of a drilled cylinder completely surrounded by a tubular chamber connected at the bottom with a suction pump. The pipe and the chamber are alternatively closed by means of a common off-on valve while the change of the product dosing is obtained through the shifting of the upper wall of said tubular chamber.

Another sophisticated solution utilizing suction means is illustrated in the GB—A—1 082 674 referring to improvements in the filling of containers with pulverulent materials which can be dispensed under the difference of a differential gas pressure. In such a solution the differences in the product dosing (very restricted indeed) are controlled by the change of the differential pressure.

In view of the foregoing, the basic technical task of the invention is to design a device for dosing granular products, particularly foodstuffs, with which the difficulties outlined above can be overcome.

One important object that falls within the framework of the said technical task is to design a particularly precise dosing device that is able to operate on the product at the level of the delivery means, the purpose of this also being to allow extremely simple means for receiving the product delivered to be evolved.

Another important object of the invention is to design a dosing device that can be easily be set and is practically of universal use, that is to say, suitable to deliver dosed quantities that can also be quite different one from the other.

A further, by no means last, object of the invention is to design a dosing device of very simple structure that can easily be made and be fitted to a dosing machine, and that, above all, neither damages nor breaks even the most delicate products.

These objects and others too that will become more apparent later on are attained by the device according to the invention for dosing granular products, particularly foodstuffs, comprising: a pipe for delivering the product to be dosed, provided at its end with means for opening and closing the same, wherein at least one intermediate part is drilled with holes not permeable by said product, the said delivery pipe extending in a direction such as to permit a gravity descent of the granular product; suction means that terminate on the outside of the said delivery pipe provided with means able to interrupt the flow of air drawn in from the said delivery pipe characterized by the fact that it comprises an annular channel that partially enshrouds said pipe in the region of said drilled part and connected to said suction means, said annular channel being provided to be positioned on that pipe at a distance from its lower end such as to define a terminal part of an inside volume virtually corresponding to the volume of the granular product to be delivered per dosing operation.

Further characteristics and advantages will emerge more obviously from the description that follows of one preferred but not sole, embodiment for the dosing device forming the subject of the invention, illustrated purely as an unlimited example on the accompanying drawings, in which:

— Figure 1 is a general diagrammatic view of the dosing device in question;

— Figure 2 is a sectional view of the device, in which the operation thereof can be seen.

With reference to the said figures, the dosing device is shown globally at 1.

In the preferred embodiment, the device 1 comprises a substantially vertical delivery pipe 2, positioned beneath a hopper 3 containing the granular products to be dosed and sent to means 4 for receiving them, in themselves known, shown diagrammatically in the figures. The lower extremity of the delivery pipe 2 is provided with means 5 for opening and closing the said pipe, these comprising a bottom plate 6 perpendicular to the axis of the delivery pipe 2 and movable in a plane at a right angle to the said axis or rotatable around a horizontal axis 5a.

To the advantage of the delivery pipe 2 is the fact that, virtually over the full length thereof, there are in it a plurality of holes 7 of sizes less than those of the products to be dosed: in practice provision is made for very small holes 7 suitable to allow solely air and powdery particles to pass.

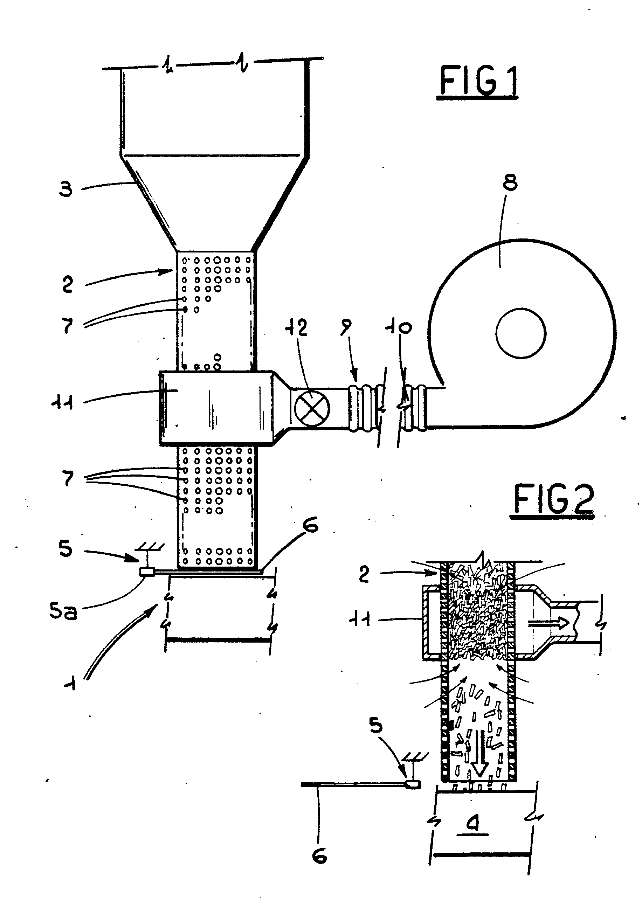

As can be seen in Figure 2, the device 1 comprises suction means 8 constituted, for example, by a suction pump. The suction means 8 are connected externally to the delivery pipe 2 through a tube 9, preferably provided with a flexible section 10, and through an annular channel 11 that partially enshrouds the outer surface of the delivery pipe 2 and opens towards the holes 7. It is envisaged that using non-illustrated support and fixing means, in themselves known, the annular channel 11 can be positioned and restrained with precision at a chosen height along the delivery pipe 2, thanks also the said flexible section 10 of the tube 9. It is also envisaged that along the tube 9 means which, when set in operation, interrupt the flow of air drawn in from the delivery pipe 2 by the suction means 8, be positioned. The said air flow interruption means are, in the example given herein, constituted by an on-off valve 12.

The operation of the dosing device according tothe invention is described below, with reference in particular to Figure 2.

The annular channel 11 is placed along the outer surface of the delivery pipe 2 at a position such as to define a terminal part of the said delivery pipe 2, the inside volume of which virtually corresponds to the volume of the granular product to be delivered per dosing operation. The extension in height of the said terminal part can be readily determined, also in an experimental fashion, by varying the position in height of the annular channel 11.

With the bottom plate 6 kept in the closed position, the granular product is made to go downwards from the hopper 3 in such a way as to fill the whole delivery pipe 2.

The suction means 8 are then set in operation, with the consequent creation of a vortex in the region of the area of the delivery pipe 2 enshrouded by the annular channel 11. The said vortex does not cause the granular product to be expelled, because of the reduced dimensions of the holes 7, but creates a compactness of the said granular product in the region of the said annular channel 11. In actual practice, as shown in Figure 2, the granular product becomes denser and attaches itself to the delivery pipe 2 forming a sort of plug that blocks the said delivery pipe 2.

By rotating the plate 6 it is then possible to cause the dosed quantity of the granular product contained in the delivery pipe 2 below the annular channel 11, to move downwards at a point where the means 4 for receiving it are located. The said blockage prevents the product above the annular channel 11 from flowing into the said means 4.

The downward movement of the granular product placed below the annular channel 11 is not obstructed by the said eddy effect since, thanks to the presence of the holes 7 over virtually the full length of the delivery pipe 2, air can penetrate into the said pipe in order to fill the space left free by the granular product that is dropping downwards.

In a further operating stage, the bottom plate 6 is once again placed in the closed position and, subsequently, the on-off valve 12 is set in operation to interrupt the suction effect in the region of the annular channel 11. As a consequence of this, the said blocking plug disintegrates and the granular product drops along the delivery pipe 2 until the latter has been completely filled.

With the suction effect duly restored in the region of the annular channel 11, the cycle described previously can be repeated and a further dosed quantity of the granular product can be delivered.

The invention fulfills the objects proposed and offers numerous, important advantages.

The dosing device in question operates in the region of the delivery means and not in the region of the means 4 that receive the product, and consequently it is always impossible for a quantity greater than that predetermined, to move downwards.

Furthermore the dosing is extremely precise and easy to vary by simply displacing in height the annular channel 11.

The device offers maximum hygiene guarantee since use is not made of means that are placed in contact with the products to be dosed and, indeed, the vortex effect can bring about the removal of any minor impurity present in the delivery pipe 2.

It is stressed that with the said device, mechanical means for separating one dosed quantity from the other are not used and that it is possible, therefore, to handle, without any danger, extremely delicate or fragile products.

Emphasis is also given to the fact that the dosing device according to the invention is of particular simplicity and that it can easily be fitted to a dosing machine, while the means 4 for receiving the product can be of any structure.

The invention as outlined above is liable to undergo numerous modifications and variants, all of which falling within the framework of the concepts of the invention. Furthermore, all parts may be substituted with others of technical equivalence. In practice, the materials used and the dimensions may be any to suit the requirements.

### Claims

1. Device for dosing granular products, particularly foodstuffs, comprising: a pipe (2) for delivering the product to be dosed, provided at its end with means (5) for opening and closing the same, wherein at least one intermediate part is drilled with holes (7) not permeable by said product, the said delivery pipe (2) extending in a direction such as to permit a gravity descent of the granular product; suction means (8) that terminate on the outside of the said delivery pipe (2) provided with means (12) able to interrupt the flow of air drawn in from the said delivery pipe (2) characterized by the fact that it comprises an annular channel (11) that partially enshrouds said pipe (2) in the region of said drilled part (7) and connected to said suction means (8), said annular channel (11) being provided to be positioned on the said pipe (2) at a distance from its lower end such as to define a terminal part of an inside volume virtually corresponding to the volume of the granular product to be delivered per dosing operation.

2. Dosing device according to claim 1, characterized by the fact that the said annular channel (11) is connected to the said suction means (8) through a, at least partially flexible, tube (9—10).

3. Dosing device according to claim 1, characterized by the fact the said means (12) which, when set in operation, interrupt the said suction flow of air, are constituted by an on-off valve placed between the said suction means (8) and the said annular channel (11).

4. Dosing device according to claim 1 characterized by the fact that the said delivery pipe (2) is placed in a vertical position, beneath and directly connected to a hopper (3) containing the granular product to be dosed.

5. Dosing device according to Claim 1, characterized by the fact that the said delivery pipe (2) has holes (7) drilled in it over virtually the full length thereof.

6. Dosing device according to Claim 1, characterized by the fact that the said suction means (8) comprise a suction pump.

### Revendications

1. Dispositif de dosage de produits granulaires, en particulier des produits alimentaires, comprenant: un conduit (2) de distribution du produit qui doit être dosé, pourvu à son extrémité de moyens (5) destinés à permettre son ouverture et fermeture et dont au moins une portion intermédiaire est percée de trous (7) de section plus petite que celle du produit qui doit y être introduit, ledit conduit (2) de distribution s'étendant selon une direction susceptible de permettre la descente par gravité du produit granulaire; des moyens d'aspiration (8) qui se terminent à l'extérieur dudit conduit (2) de distribution, pourvus de moyens (12) en mesure d'interrompre l'écoulement d'air aspiré dudit conduit (2) de distribution, caractérisé en ce qu'il comporte un canal annulaire (11) qui enveloppe partiellement ledit conduit (2) dans la zone de ladite portion percée de trous (7) et relié auxdits moyens d'aspiration (8) étant prévu que ledit canal annulaire (11) soit positionné sur le conduit (2) précité à une telle distance de son extrémité inférieure qu'il définit une portion terminale de volume intérieur correspondant effectivement au volume du produit granulaire qui doit être fourni par chaque opération de dosage.

2. Dispositif de dosage selon la revendication 1, caractérisé en ce que ledit canal annulaire (11) est relié auxdits moyens d'aspiration (8) à travers un tube partiellement flexible (9—10).

3. Dispositif de dosage selon la revendication 1, caractérisé en ce que lesdits moyens (12) qui, quand mis en fonction, interrompent ledit écoulement d'air aspiré comportent une soupape d'ouverture/fermeture disposée entre lesdits moyens d'aspiration (8) et ledit canal annulaire (11).

4. Dispositif de dosage selon la revendication 1, caractérisé en ce que ledit conduit (2) de distribution est disposé en position verticale, au-dessous de et directement relié à une trémie (3) contenant le produit granulaire qui doit être dosé.

5. Dispositif de dosage selon la revendication 1, caractérisé en ce que ledit conduit (2) de distribution est pourvu de petits trous (7) distribués pratiquement sur toute sa longueur.

6. Dispositif de dosage selon la revendication 1, caractérisé en ce que lesdits moyens d'aspiration (8) comportent une pompe d'aspiration.

### Patentansprüche

1. Anlage zum Dosieren von körnigen Produkten, insbesondere Nahrungsmitteln, enthaltend ein Rohr (2) zur Abgabe des zu dosierenden Produktes, versehen an seinem Ende mit Mitteln (5) zum Öffnen und Schliessen des Rohres selbst, welches wenigstens einen mit gebohrten Löchern (7) versehenen Zwischenabschnitt aufweist, durch die das genannte Produkt nicht austreten kann, wobei sich das genannte Abgaberohr (2) in einer solchen Richtung erstreckt, dass ein Absinken des körnigen Produktes durch Schwerkraft ermöglicht ist; sowie Ansaugmittel (8), die ausserhalb des genannten Abgaberohres (2) liegen, versehen mit Mitteln (12), die in der Lage sind, den aus dem genannten Abgaberohr (2) angesaugten Luftstrom zu unterbrechen, dadurch gekennzeichnet, dass sie einen ringförmigen Kanal (11) enthält, der das genannte Rohr (2) in dem Bereich des genannten gebohrten Abschnittes (7) zum Teil umgibt und an die genannten Ansaugmittel (8) angeschlossen ist, wobei der genannte Kanal (11) an dem genannten Rohr (2) mit einem solchen Abstand von dessen unterem Ende positioniert wird, dass ein Endabschnitt mit einem internen Volumen beschrieben wird, der grundsätzlich dem Volumen des körnigen Produktes entspricht, das bei jedem Dosiervorgang abgegeben werden soll.

2. Anlage zum Dosieren nach Patentanspruch 1, dadurch gekennzeichnet, dass der genannte ringförmige Kanal (11) über wenigstens eine teilweise flexible Leitung (9, 10) an die genannten Ansaugmittel (8) angeschlossen ist.

3. Anlage zum Dosieren nach Patentanspruch 1, dadurch gekennzeichnet, dass die genannten Mittel (12), die, wenn sie sich im Betrieb befinden, den genannten angesaugten Luftstrom unterbrechen, aus einem Sperrventil bestehen, das zwischen die genannten Ansaugmittel (8) und den genannten ringförmigen Kanal (11) eingesetzt ist.

4. Anlage zum Dosieren nach Patentanspruch 1, dadurch gekennzeichnet, dass das genannte Abgaberohr (2) in einer vertikalen Position angeordnet ist, und zwar unter einem das zu dosierende körnige Produkt enthaltenden Trichter (3) und direkt an diesen angeschlossen.

5. Anlage zum Dosieren nach Patentanspruch 1, dadurch gekennzeichnet, dass das genannte Abgaberohr (2) grundsätzlich über seine gesamte Länge mit gebohrten Löchern (7) versehen ist.

6. Anlage zum Dosieren nach Patentanspruch 1, dadurch gekennzeichnet, dass die genannten Ansaugmittel (8) eine Ansaugpumpe enthalten.

# FIG 1

# FIG 2